# EUROPÄISCHE PATENTANMELDUNG

(11) **EP 0 649 819 A1**
(43) Veröffentlichungstag der Anmeldung: **26.04.1995**
(21) Anmeldenummer: 94890171.5
(22) Anmeldetag: 14.10.1994
(51) Int. Cl.: C02F 3/28, C05F 7/00

(54) **Verfahren zur Reinigung von biologischen Abwässern**

(30) Priorität: 22.10.1993 AT 2142/93
(71) Anmelder: Howorka, Franz, A-1021 Wien (AT)
(72) Erfinder: Buzetzki, Eduard, A-7041 Wolkaprodersdorf (AT)
(74) Vertreter: Kliment, Peter

(57) **Zusammenfassung**

Durch ein biologisches Abwasserreinigungsverfahren werden einerseits Klarwasser und andererseits Produkte zur Bodenbehandlung gewonnen, die in einem Kreislaufprozeß dem Boden jene Stoffe wiedergeben, die ihm durch biologische Verfahren vorher entzogen wurden.

Bei diesem Verfahren wird der abgesetzte Schlamm einer anaeroben Gärung unterworfen, die durch Einstellung des pH-Werts auf unter 6,3 vorzeitig abgebrochen wird. Der Überlauf des Schlammbeckens wird über ein Filterbett geleitet, das bevorzugt aus ionentauschenden und adsorptiven mineralischen Feststoffen, gegebenenfalls Aktivkohle, und basischen Stoffen besteht. Die beladene Filtermasse wird gemeinsam mit dem Schlamm einem abschließenden Verrottungsprozeß unterworfen.

## Beschreibung

Gegenstand der vorliegenden Erfindung ist ein Verfahren zur Reinigung von biologischen Abwässern, bei welchem die Feststoffe aus dem Abwasser absetzen gelassen werden, in dem entstehenden Schlamm eine anaerobe Gärung ermöglicht, der Überlauf dieser Gärstufe über ein körniges Filterbett filtriert, der Rückstand anschließend einer aeroben Verrottung zugeführt und der Überlauf der Verrottungsstufe in einem zusätzlichen Reinigungsschritt behandelt wird.

Verfahren dieser Art werden zur Aufarbeitung von Abwässern aus dem privaten wie dem kommunalen Bereich ebenso wie aus landwirtschaftlichen Betrieben eingesetzt. Bekannt ist dabei neben der anaeroben auch die aerobe Vergärung der Klärschlämme.

So beschreibt die US-PS 4 415 450 ein Verfahren zur kombinierten anaeroben/aeroben Behandlung von Abwässern, wobei in diesem Verfahren ein Filtrationsschritt im Anschluß an den anaeroben Absetzschritt vorgesehen ist.

In der US-PS 4 415 450 ist ein ähnliches Verfahren angegeben, bei welchem der Filtrationsablauf anschließend nochmals einer anaeroben Gärung und dann der Wirkung aerober Mikroorganismen sowie der Wirkung von Wasserpflanzen ausgesetzt wird.

Das Verfahren gemäß der WO/01986 bezweckt die Entfernung von Nitrat/Nitrit aus Abwässern, wobei diese Abwässer nacheinander reduzierenden und oxidierenden Bedingungen ausgesetzt werden.

Bei der aeroben Vergärung werden die organischen Substanzen unter Luftzutritt oxidiert und im Extremfall bis zu den anorganischen Endprodukten CO₂ und Wasser "veratmet".

Wenn die Mikroorganismen jedoch unter anaeroben Bedingungen gehalten werden, d.h. wenn der Luftzutritt verhindert wird, werden die organischen Substanzen nicht vollständig oxidiert, sondern nur zu Zwischenprodukten abgebaut. Als solche entstehen aus den Kohlenhydraten, Proteinen oder Fetten u.a. organische Säuren und Alkohole, die im Vergleich zu den Endprodukten der aeroben Gärung wesentlich energiereicher sind.

Die als Reaktionsprodukte der anaeroben Gärung entstehenden organischen Säuren bewirken in dem Schlamm eine Ansäuerung, die einer weiteren Vergärung entgegenwirkt. Um daher das Fortschreiten der anaeroben Gärung aufrecht zu halten, wurden bisher bei derartigen Verfahren stets basische Substanzen, wie Kalk und dergl., zugesetzt.

Gleichzeitig mit dem Abbau zu kurzkettigen Säuren und Alkoholen bilden sich bei der anaeroben Gärung auch Faulgase, wie Methan, Schwefelwasserstoff und dergl.. Das Methan wird hauptsächlich von einer speziellen Bakteriengattung, den sogenannten Methanbakterien, produziert. Da sich das energiereiche Methan als interessantes Nebenprodukt der Klärschlammvergärung erwiesen hat, werden dem Schlamm häufig gleichzeitig mit dem genannten Zusatz von basischen Stoffen auch Kulturen von Methanbakterien zugesetzt, um die Gärung in die gewünschte Richtung zu lenken.

Diese Prozesse sind mit einer beträchtlichen Geruchsbelästigung der Umgebung verbunden.

Die Beseitigung der so vergorenen Klärschlämme stellt eine weiteres Problem dar, dem man durch verschiedene Verfahren beizukommen versucht. So gibt es die Möglichkeit, die Klärschlämme zu verbrennen oder sie zu humusartigen Stoffen weiter zu verarbeiten. Für den letztgenannten Zweck wird eine aerobe Verrottung der ausgegorenen Schlämme vorgenommen, die jedoch nur dann in gewünschter Weise vor sich geht, wenn den Klärschlämmen organisches Zusatzmaterial beigefügt wird. Als solches eignet sich Stroh, Rinde, Holzmaterial, Grünschnitte und Ernterückstände. Die Verrottung erfolgt in Mieten oder in Rottetrommeln, wobei in einer ersten Stufe eine Heißrotte bei Temperaturen bis zu etwa 65°C erfolgt. Diese Verfahrensstufe stellt eine sogenannte Hygienisierung, d.h. Abtötung schädlicher Keime, dar.

Die Heißrotte ist eine Verfahrensstufe, bei deren Durchführung Sorgfalt anzuwenden ist, um nicht gleichzeitig mit den schädlichen Keimen auch sämtliche nützlichen Keime abzutöten. Zu heiße Temperaturbereiche in der Rottemasse bewirken eine lokale Überhitzung und Abtötung auch der nützlichen Mikroorganismen, während in zu kalten Bereichen die erforderliche Hygienisierung nicht ausreichend stattfindet.

Da es sich herausgestellt hat, daß diverse nützliche Keime die Temperaturen von etwa 65°C überleben, wird in einem nachfolgenden Reifeprozeß eine abschließende Umsetzung zu humusartigen Produkten ermöglicht.

Als dritte Stufe erfolgt in diesem Zusammenhang stets eine Zugabe von Mineralstoffen, wodurch das Endprodukt eine Zusammensetzung erhält, die ähnlich der von natürlicher Erde ist. Bei diesem Verfahren wird die Summe dieser drei Verfahrensstufen als Vererdung bezeichnet.

Der bei der Absetzung des Klärschlammes aus den zu reinigenden biologischen Abwässern entstehende Überlauf wird in der Regel weiter behandelt, um darin enthaltene Schwebestoffe und andere Verunreinigungen zu entfernen. Zu diesem Zweck wird meist ein Fällungsmittel zugesetzt und der neuerlich gebildete Schlamm wieder in Absetzbecken abgetrennt.

Ziel der vorliegenden Erfindung ist nun die Bereitstellung eines Verfahrens zur Reinigung von biologischen Abwässern, bei dem ohne große Geruchsbelästigung für die Umgebung einerseits das biologische Abwasser bis zu einem Reinheitsgrad geklärt wird, der ein Versickern oder Verregnen des entstehenden Klarwassers erlaubt, und andererseits ein erdeartiges Endprodukt aus dem Klärschlamm gewonnen wird, das zur Regenerierung von Böden verschiedenster Art eingesetzt werden kann.

Dieses Ziel wird bei einem Verfahren der eingangs genannten Art dadurch erreicht daß die anaerobe Gärung des Schlammes durch Einstellen des pH-Wertes der Masse auf bis zu 6,3 abgebrochen wird, daß nach der Filtration des Gärstufenüberlaufs das Filtrat als Klarwasser abgelassen wird und daß die beladene Filtermasse mit dem in seiner Gärung unterbrochenen Schlamm vermischt und der aeroben Verrottung zugeführt wird.

Die biologischen Abwässer weisen vor ihrer Reinigung in der Regel einen pH-Wert in der Größenordnung von 6,5 bis 7,1 auf. Durch die beginnenden anaerobe Gärung, die bereits während des Absetzvorganges einsetzt, fällt der pH-Wert langsam ab. Um die Absenkung des pH-Wertes in der angestrebten Weise relativ bald zu erreichen, werden dem Schlamm bevorzugt Versäuerungsmikroorganismen oder eine Säure selbst, wie insbesondere Schwefelsäure, zugesetzt. Durch regelmäßige pH-Wert-Kontrolle wird dann die Absenkung auf einem Wert von unter 6,3 beobachtet.

Bei Anwesenheit von Schwermetallen in dem Schlamm wird bevorzugt eine Absenkung des pH-Werts auf unter 3,5 bewirkt, um die Schwermetalle in Lösung zu bringen und mit dem Überlauf auszutragen. Anschließend wird in diesem Fall meist eine Ausfällung dieser Schwermetalle im Überlauf mit Hilfe eines komplexen Fällungsmittels hervorgerufen. Die gebildeten Niederschläge werden absetzen gelassen und das Überlaufwasser in oben genannter Art weiter verarbeitet.

Wenn das Problem der Schwermetalle nicht vorliegt, wird der pH-Wert des Schlammes bevorzugt auf einen Wert von 5,3 bis 6,3 abgesenkt.

Die zu diesem Zweck häufig verwendeten Versäuerungsmikroorganismen sind solche der Gattungen Hefen, Milchsäureund Propionsäurebakterien, Coli aerogenes und Clostridium.

Durch die Absenkung des pH-Wertes wird die anaerobe Gärung zu einem Zeitpunkt abgebrochen, bei welchem die organischen Bestandteile des Schlammes noch außerordentlich energiereich sind. Nebenbei wird das Problem der Geruchsbelästigung deutlich vermindert.

Zur Weiterbehandlung des Überlaufs wird dieser, eventuell nach der erwähnten Abtrennung der Schwermetalle, über ein körniges Filterbett geleitet und dort so weit gereinigt, daß ein Ablassen des entstehenden Klarwassers in die Umgebung möglich ist. Die Filtermasse besteht bevorzugt aus oberflächenaktiven, d.h. ionentauschenden und adsorptiv wirkenden Stoffen, im Gemisch mit basischen Substanzen.

Zu den oberflächenaktiven Stoffen zählen mineralische ionentauschende Zeolithe einerseits und Aktivkohle andererseits. Bevorzugt wird eine Mischung dieser Stoffe verwendet. Als basische Komponente wird ein oder werden mehrere Stoffe aus der Gruppe Kalk, Calciumoxid, Magnesiumoxid und Magnesiumcarbonat zugesetzt. Die basischen Komponenten der Filtermasse bewirken eine Neutralisation des sauren Schlammes, sodaß das entstehende Klarwasser problemlos abgezogen werden kann. Mit Vorteil besteht das Filterbett aus einem Gemisch aus 60 bis 70 Gew.-% Zeolithen, 15 bis 20 Gew.-% Kalk, gegebenenfalls im Gemisch mit Magnesiumcarbonat, Magnesiumoxid und/oder Calciumoxid, und 10 bis 25 Gew.-% Aktivkohle.

Das Filterbett wird mit Vorteil mehrschichtig ausgelegt, wobei die einzelnen Schichten eine unterschiedliche Körnung aufweisen. Die Schicht mit der gröbsten Körnung kommt als oberste zu liegen, um ein Verstopfen und Verlegen des Filterbettes tunlichst zu vermeiden.

Der in seiner Gärung unterbrochene, noch verhältnismäßig energiereiche Schlamm wird mit der beladenen Filtermasse gemischt und anschließend einer aeroben Verrottung zugeführt, um den weiteren Abbau zu Produkten zu bewirken, die je nach Ausmaß und Art des mineralischem Anteils als Bodenverbesserungsmittel, organischer Dünger oder als Erde Verwendung finden können.

Die Verrottung findet in gewendeten oder belüfteten Mieten oder in Rottetrommeln statt. Unter Rottetrommeln versteht man durchlochte Trommeln, in denen die zu behandelnde Masse unter Luftzutritt umgewälzt wird.

Im Verhältnis zu den bekannten Klärschlammverrottungsverfahren wird im vorliegenden Fall die Verrottung durch den Zusatz an Mineralstoffen aus der Filtermasse leichter steuerbar. Eine lokale Überhitzung findet seltener statt, die Durchlüftung gestaltet sich wesentlich einfacher. Wurden bisher Klärschlamm-Mieten 2 bis 3 mal täglich gewendet, um Überhitzungen zu vermeiden, so können bei dem erfindungsgemäßen Verfahren die Mieten gegebenenfalls nur zweimal wöchentlich gewendet werden, ohne daß eine Gefahr für die Qualität des entstehenden Produktes vorliegt.

Das Verfahren verläuft zweistufig. Die erste Stufe ist wieder eine Heißrotte bei Temperaturen von maximal 65°C, die zweite Stufe ist das Reifeverfahren. Ein späterer Zusatz von Mineralstoffen ist in der Regel nicht nötig, da diese mit der Filtermasse eingebracht wurden.

Zur rascheren Rektionsfolge in der Verrottung können der Masse biologische Rotteorganismen odr Organismenprodukte zugesetzt werden. Als solche eignen sich mit Vorteil Bakterien von der Gattung Acetobacter, Pilzhyphen, Protozoen oder Würmer.

Wenn das Endprodukt der Verrottung als sogenanntes Bodenverbesserungsmittel verwendet werden soll, so wird der Mineralgehalt der Filtermasse so eingestellt, daß insbesondere gute Sorptionskraft im erhaltenen Produkt vorliegt. Bodenverbesserungsmittel dienen hauptsächlich zur Anhebung des Magnesiumgehaltes von Böden.

Wenn das Endprodukt der Verrottung Erdzusammensetzung aufweisen soll, so wird der Mineralstoffgehalt dementsprechend hoch eingestellt und es werden Mineralien auf Silikatbasis mit ausreichenden Calciumverbindungen ausgewählt. In üblichen Erden beträgt das Verhältnis von organischem Anteil zu mineralischem Anteil etwa 1:1.

Eine Anlage zur Durchführung des erfindungsgemäßen Verfahrens besteht im wesentlichen aus Schlammabsetzbecken oder -behältern, die vor Luftzutritt geschützt sind und eine Zuleitung für das zu reinigende Abwasser sowie eine Überlaufeinrichtung aufweisen. Das Überlaufwasser wird über das Filterbett geleitet, in dem es soweit gereinigt und neutralisiert wird, daß es in die Umgebung abgelassen werden kann.

Mit besonderem Vorteil sind der Schlammbehälter und der Filterbehälter als Zweikammereinrichtung in einem gemeinsamen Behälter angeordnet. Dieser Kombinationsbehälter ist vorzugsweise als auswechselbare, relativ leicht transportierbare Einheit ausgeführt, sodaß für einzelne Haushalte oder kleinere bäuerliche Betriebe statt einer Senkgrubenentleerung die Auswechselung derartiger Behälter ins Auge gefaßt werden kann. In einer günstigen Ausführungsform und bei Bekanntheit des durchschnittlichen Feststoffgehaltes des zu reinigenden Abwassers können die Dimensionen von Schlammbehälter und Filterbett so aufeinander abgestimmt werden, daß der Schlammbehälter und das beladene Filterbett gleichzeitig geleert bzw. entnommen werden können.

Eine derartige Anlage wird im Folgenden anhand der beigelegten Zeichnung näher erläutert:

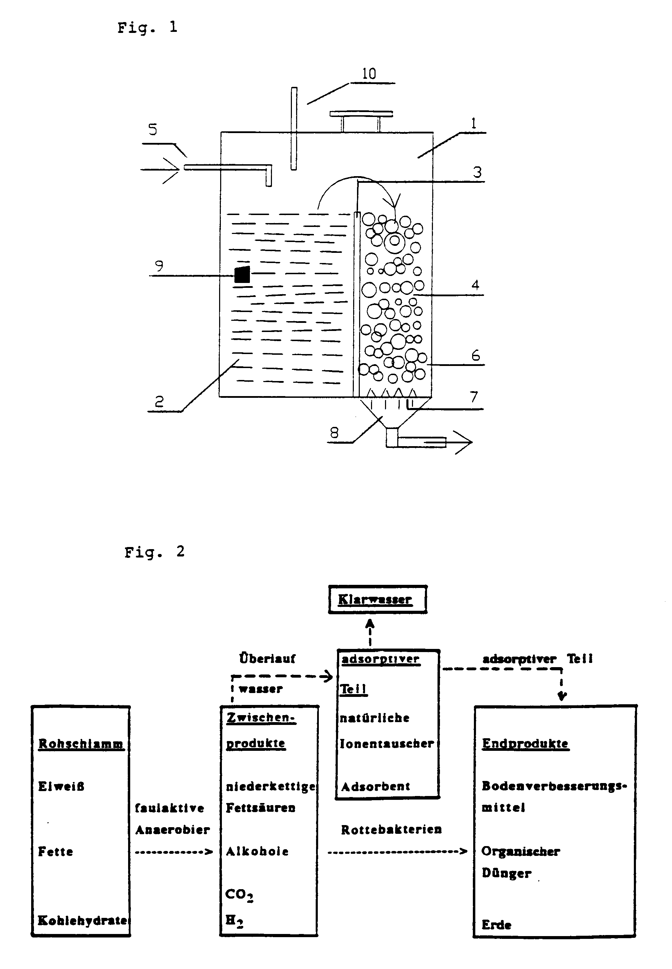

In Fig. 1 ist ein Längsschnitt durch einen Kombinationsbehälter 1 dargestellt. Ein Schlammbehälter 2 ist durch eine Trennwand 3 von einem Filterbehälter 4 getrennt. Durch eine Zuleitung 5 gelangt das zu reinigenden Abwasser in den Behälter 2, in dem sich die Feststoffe absetzen. Die Zuleitung 5 ist höher angeordnet als der Oberrand der Trennwand 3, damit das Überlaufwasser in den Filterbehälter 4 überfließen kann. Am Boden des Filterbehälters 5 ist das Filtermaterial 6, vorzugsweise in Schichten unterschiedlicher Korngröße, aufgelegt. Der Boden des Filterbehälters 5 ist als Düsenboden 7 ausgebildet. Über die Ableitung 8 wird das Klarwasser ausgetragen. Ein pH-Meßgerät 9 dient zur ständigen Kontrolle des pH-Wertes, der über die Hilfsleitung 10 durch Säurezufuhr eingestellt wird. Gewünschtenfalls kann durch die Hilfsleitung 10 auch eine Aufschlämmung von Versäuerungsbakterien eingebracht werden, die durch anaeroben Abbau die gewünschte pH-Senkung verursachen.

In der Regel ist der Volumsinhalt des Schlammbehälters größer als der des Filterbehälters. Meist wird das Volumsverhältnis dieser beiden Behälter bei etwa 2:1 liegen.

Fig. 2 zeigt eine schematische Darstellung des Verfahrensablaufes mit Schlammabsetzung, teilweiser Vergärung und abschließender Verrottung des Gemisches aus gärungsgestopptem Klärschlamm und beladener Filtermasse. Es wird Klarwasser und ein Produkt zur Bodenbehandlung gewonnen.

Durch das erfindungsgemäße Verfahren ist es möglich, in einem Kreislaufprozeß dem Boden Substanzen in verträglicher Zusammensetzung zuzuführen, die ihm durch biologische Prozesse entzogen wurden. Es findet eine stoffliche Veredelung von Abfallprodukten statt, sodaß wertvolle Endprodukte gewonnen werden, die den modernen Ansprüchen an eine Erhaltung der Qualität von Gewässern und Böden entsprechen.

## Patentansprüche

1. Verfahren zur Reinigung von biologischen Abwässern, bei welchem die Feststoffe aus dem Abwasser absetzen gelassen werden, in dem entstehenden Schlamm eine anaerobe Gärung ermöglicht, der Überlauf dieser Gärstufe über ein körniges Filterbett filtriert, der Rückstand anschließend einer aeroben Verrottung zugeführt und der Überlauf der Verrottungsstufe in einem zusätzlichen Reinigungsschritt behandelt wird, **dadurch gekennzeichnet, daß** die anaerobe Gärung des Schlammes durch Einstellen des pH-Wertes der Masse auf bis zu 6,3 abgebrochen wird, daß nach der Filtration des Gärstufenüberlaufs das Filtrat als Klarwasser abgelassen wird und daß die beladene Filtermasse mit dem in seiner Gärung unterbrochenen Schlamm vermischt und der aeroben Verrottung zugeführt wird.

2. Verfahren nach Anspruch 1, **dadurch gekennzeichnet, daß** dem Schlamm Versäuerungsmikroorganismen zugesetzt werden.

3. Verfahren nach Anspruch 2, **dadurch gekennzeichnet, daß** dem Schlamm Mikroorganismen der Gattung Hefen, Milchsäure- oder Propionsäurebakterien, Coli aerogenes oder Clostridien zugesetzt werden.

4. Verfahren nach Anspruch 1, **dadurch gekennzeichnet, daß** der anaerobe Gärungsprozeß durch Zusatz von Säure, vorzugsweise von Schwefelsäure, abgebrochen wird.

5. Verfahren nach einem der Ansprüche 1 bis 4, **dadurch gekennzeichnet, daß** der anaerobe Gärungsprozeß bei einem pH-Wert von 5, 3 bis 6,3 abgebrochen wird.

6. Verfahren nach Anspruch 4, **dadurch gekennzeichnet, daß** bei Vorliegen von Schwermetallen in dem zu reinigenden Abwasser der anaerobe Gärungsprozeß durch Zusatz von Schwefelsäure bei einem pH-Wert von unter 3,5 abgebrochen wird.

7. Verfahren nach Anspruch 6, **dadurch gekennzeichnet, daß** die gelösten Schwermetalle im Überlauf ausgefällt und absetzen gelassen werden.

8. Verfahren nach einem der Ansprüche 1 bis 7, **dadurch gekennzeichnet, daß** als Filterbett oberflächenaktive Feststoffe im Gemisch mit basischen Substanzen verwendet werden.

9. Verfahren nach einem der Ansprüche 1 bis 8, **dadurch gekennzeichnet, daß** als oberflächenaktive Feststoffe Zeolithe, gegebenenfalls in Mischung mit Aktivkohle, verwendet werden.

10. Verfahren nach einem der Ansprüche 1 bis 9, **dadurch gekennzeichnet, daß** als basische Substanzen Kalk, Calciumoxid, Magnesiumcarbonat und/oder Magnesiumoxid verwendet werden.

11. Verfahren nach einem der Ansprüche 1 bis 10, **dadurch gekennzeichnet, daß** als Filterbett ein Gemisch aus 60 bis 70 Gew.-% Zeolithen, 15 bis 20 Gew.-% Kalk, gegebenenfalls im Gemisch mit Magnesiumcarbonat, Magnesiumoxid und/oder Calciumoxid, und 10 bis 25 Gew.-% Aktivkohle verwendet wird.

12. Verfahren nach einem der Ansprüche 1 bis 11, **dadurch gekennzeichnet, daß** der Überlauf über ein mehrschichtiges Filterbett mit Schichten unterschiedlicher Körnung geleitet wird.

13. Verfahren nach Anspruch 12, **dadurch gekennzeichnet, daß** als oberste Schicht die Schicht mit gröbster Körnung angeordnet wird.

14. Verfahren nach einem der Ansprüche 1 bis 13, **dadurch gekennzeichnet, daß** die aerobe Verrottung der Mischung von beladener Filtermasse und dem in seiner Gärung unterbrochenen Schlamm unter Zusatz von Verrottungshilfen aus der Gruppe Bakterien der Gattung Acetobacter, Pilzhyphen, Protozoen oder Würmer durchgeführt wird.

15. Verfahren nach einem der Ansprüche 1 bis 14, **dadurch gekennzeichnet, daß** die aerobe Verrottung der Mischung von beladener Filtermasse und dem in seiner Gärung unterbrochenen Schlamm in gewendeten oder belüfteten Mieten vorgenommen wird.

16. Verfahren nach einem der Ansprüche 1 bis 15, **dadurch gekennzeichnet, daß** die aerobe Verrottung der Mischung von beladener Filtermasse und dem in seiner Gärung unterbrochenen Schlamm in Rottetrommeln vorgenommen wird.

17. Verfahren nach einem der Ansprüche 1 bis 16, **dadurch gekennzeichnet, daß** die Verrottung der Mischung von beladener Filtermasse und dem in seiner Gärung unterbrochenen Schlamm zweistufig mit den Stufen Heißrotte und Reifung geführt wird.

18. Verfahren nach Anspruch 17, **dadurch gekennzeichnet, daß** die Stufe der Heißrotte bei einer Temperatur von etwa 65°C durchgeführt wird.

19. Verfahren nach einem der Ansprüche 1 bis 18, **dadurch gekennzeichnet, daß** dem verrotteten Endprodukt zur Verwendung desselben als Bodenverbesserungsmittel Sorptionsmaterial zugegeben wird.

20. Verfahren nach einem der Ansprüche 1 bis 18, **dadurch gekennzeichnet, daß** dem verrotteten Endprodukt zur Verwendung desselben als Erdersatz Mineralstoffe auf Silikatbasis zugesetzt werden.

21. Anlage zur Durchführung des Verfahrens nach einem der Ansprüche 1 bis 13 mit einem vor Luftzutritt geschütztem Schlammbehälter, der eine Zuleitung für das biologische Abwasser und eine Überlaufeinrichtung aufweist, **dadurch gekennzeichnet, daß** sie den Schlammbehälter (1) und einen Filtrationsbehälter (2) als Zweikammereinrichtung in einem gemeinsamen Behälter (Kombinationsbehälter) aufweist.

22. Anlage nach Anspruch 21, **dadurch gekennzeichnet, daß** der Kombinationsbehälter als auswechselbare Einheit ausgeführt ist.

23. Anlage nach Anspruch 21 oder 22, **dadurch gekennzeichnet, daß** sie im Schlammbehälter (1) eine pH-Meßeinrichtung (9) und eine Zuleitung (5) für die Einbringung einer Aufschlämmung von Mikroorganismen und/oder von Säure enthält.
